# EUROPEAN PATENT SPECIFICATION

(11) **EP 0 513 929 B1**
(45) Date of publication and mention of the grant of the patent: **11.09.1996**
(21) Application number: 92201392.5
(22) Date of filing: 15.05.1992
(51) Int. Cl.: C08J 9/00, C08J 9/10, C08J 9/08

(54) **Process for producing a foamed polymer endowed with high resistance to solvents and high temperature resistance**
Verfahren zur Herstellung eines geschäumten Kunststoffes mit hoher Lösungsmittel- und Hitzebeständigkeit
Procédé de préparation d'une mousse de polymère à haute résistance aux solvants et à la chaleur

(30) Priority: 17.05.1991 IT MI911357
(43) Date of publication of application: 19.11.1992
(73) Proprietor: POLIMEX S.p.A., I-35139 Padova (IT)
(72) Inventor: Lauri, Leone, I-32014 Ponte Nelle Alpi (Belluno) (IT)
(74) Representative: Martegani, Franco

(56) References cited:
- EP-A- 0 074 907
- EP-A- 0 458 404
- CH-A- 278 068
- FR-A- 1 266 487
- LU-A- 44 900
- NL-C- 135 779

## Description

The preferred, well-known manufacturing process to produce a cellular foamed body based on a vinyl chloride polymer or copolymer, uses a mixture of one or more isocyanates, such as toluenediisocyanate, polymethylenepolyphenylisocyanate, poly(vinyl chloride), maleic anhydride, phtalic anhydride, one or more vinylidene compounds, such as styrene and acrylonitrile, a foaming agent, such as azodiisobutyronitrile, one or more stabilizer compounds, such as tribasic lead sulfate, dibasic Lead phosphite, dibasic lead phthalate, or barium-cadmium-zinc, lead-barium complexes.

Said mixture, which, after compounding, shows a paste-like consistency, is poured into a mould, and then the temperature of the mould is increased, under pressure, until a value of 180°C is reached, to cause poly(vinyl chloride) to gel. The semifoamed article obtained in that way -- also designated "germ" -- will be caused to complete its foaming by heating it in the presence of water or steam.

NL-A-135 779 describes a process of this type - others methods to produce a cellular foamed body based on a vinyl chloride polymer are for instance described in FR-A-1 266 487 and EP-A-74 907.

EP-A-74907 relates to a process for producing a cellular foamed product by extrusion of a mixture comprising: a poly(vinyl chloride), a foaming agent and an organic anhydride. The obtained product is cut in pieces which are foamed in water at a temperature over 70°C.

These types of production methods are not very suitable for a large-scale commercial production, in that compound lots exceeding a certain weight -- about 300-400 kg -- cannot be prepared, with the number of produced germs being consequently reduced; the solution containing maleic anhydride, vinylidene compound, isocyanate is laborious and not very reliable, and, inasmuch as it is prepared at a temperature comprised within the range of from 30°C to 35°C, when it comes into contact with the other components, the above described mixture causes the compound which is being prepared to densify, and eventually causes it to become unusable.

The general purpose of the present invention is of solving the above technical problems, by providing a production process which can be used at the commercial level, in a reliable and certain way.

The present invention relates to a process for producing a foamed polymer, comprises the following steps:
- inside a dissolver, mixing a mixture constituted by at least one isocyanate and a first unsaturated anhydride, which is charged to the dissolver in the liquid state and at a temperature of around 70°C ;
- progressively cooling said mixture, with continuous stirring, until a temperature not higher than 22°C is reached;
- adding to the mixture, with continuous stirring, a second aromatic anhydride, at least one foaming agent, poly(vinyl chloride), and a heat stabilizer;
- keeping said mixture with continuous stirring, at said temperature, until a mixture with a paste-like consistency (a "paste") is obtained, which is poured, after a preliminary filtration, into a mould, or container;
- curing the paste by charging the container to an oven under atmospheric pressure and at a temperature not higher than 80°C;
- causing the paste to undergo complete curing under pressure, by increasing the temperature up to 180°C, and subsequent cooling until partially foamed germs are obtained; and
- completing the germ foaming process by heating in water, or inside ovens in the presence of steam.

Particular embodiments of the process according to the present invention are disclosed in the following disclosure, and are defined in the dependent claims.

One or more isocyanates, such as 2,4-2,6-toluene-diisocyanate, 4,4'-diphenylmethane diisocyanate, and a first unsaturated anhydride, such as maleic anhydride, are charged to a dissolver. Maleic anhydride, charged in the liquid state, at the temperature of 70°C, with the reaction mixture being kept constantly stirred, with the impeller of the dissolver revolving at a peripheral speed comprised within the range of from 6 meter/second to 9 meter/second, preferably of 8 meter/second (20 feet/second to 30 feet/second, preferably of 26.8 feet/second), said mixture is progressively cooled, until a temperature is reached, which is comprised within the range of from 14°C to 18°C. After reaching this temperature, which is then kept constant, a second anhydride, such as phthalic anhydride, one or more foaming agents, such as azodiisobutyronitrile and azodicarbonamide, a vinylidene compound, such as styrene, poly(vinyl chloride) and a heat stabilizer, are added to the dissolver. The compounding is continued, still with cooling, with the peripheral speed of the impeller set at a value comprised within the range of from 16 meter/second to 23 meter/second, and preferably of 20 meter/second (53 feet/second to 76 feet/second, and preferably of 67 feet/second).

In that way, a perfectly homogeneous paste-like compound ("paste") is obtained, which, after filtration, is poured into suitable containers for the subsequent "curing" process, or directly into the mould(s). During this operation, the temperature of the compound is kept comprised within the range of from 18°C to 22°C. The filtration of the paste is essential, in order to eliminate the presence of impurities deriving from the raw materials which are used to prepare the compound, to prevent that, during the foaming step, in the cellular structure of the foamed plastic article cavities or cracks may develop, which would then render unusable the finished article.

The "grafting" reaction of maleic anhydride-styrene-poly(vinyl chloride) is initiated by charging the paste, inside suitable containers, to ovens inside which air is kept circulating at a speed of 0.5-2 m/second, relative environmental humidity is of 15-20%, and temperature is comprised within the range of from a value of 35°C up to a value of 80°C, for a reaction time of from 1 to 6 hours. In that way, bodies are obtained, the hardness of which is such that they can be mechanically handled to be charged to the hollows of the moulds.

The reaction is then brought to completeness under pressure, and progressively increasing temperature, with the foaming agents undergoing decomposition -- with azodiisobutyronitrile also acting as a "polymerization initiator -- and when the temperature of 170°C-180°C is reached, the gelation of poly(vinyl chloride) takes place. During the cooling step, partially foamed germs are obtained, which will end their foaming process by being heated inside ovens, in the presence of steam.

The process of paste "curing" makes it possible the time of "pressure heating/cooling" cycle, to be reduced to an extent of from a 30% up to a 40%, with the depth of the hollow of the mould being the same, as compared to the production processes known from the prior art. Inside ovens at atmospheric pressure, under such a dynamic atmosphere of saturated steam that in each point inside the oven, the difference between the local temperature and the setpoint temperature of oven is of ±2°C, with isocyanates and anhydrides reacting with water, the semifoamed germs will end their foaming process, reaching the desired density, within a time ranging from 4 to 35 hours.

In order to obtain a cellular foamed article anyway endowed with high temperature resistance and good resistance to chemical attack, by following the same operating modalities, a paste can be used, which consists of a mixture of one or more isocyanates, such as 2,4-2,6-toluenediisocyanate and/or 4,4'-diphenyl methane diisocyanate, two anhydrides, such as maleic anhydride and phthalic anhydride, poly(vinyl chloride), one or more foaming agents, such as azodiisobutyronitrile and azodicarbonamide, one or more heat stabilizers, and, if desired, high-colouring power pigments.

Examples for the production on the industrial scale, according to the present process, of cellular foamed articles based on poly(vinyl chloride).

### Example 1

In a paste constituted by a mixture of:
from 1 % to 20 % of 4,4'-diphenylmethane diisocyanate ;
from 10 % to 30 % of 2,4-2,6-toluene diisocyanate ;
from 5 % to 10 % of maleic anhydride;
from 40 % to 60 % of poly(vinyl chloride);
from 3 % to 10 % of phthalic anhydride;
from 0.5 % to 7 % of azodiisobutyronitrile ;
from 0.1 % to 5 % of azodicarbonamide
from 1 % to 5 % of styrene ; and
from 0.5 % to 2 % of dibasic lead phthalate,
wherein the percentage of the individual components by weight is referred to the total weight of the compound, and said compound is mixed in the dissolver, is filtered, is poured directly into the mould, after the "curing" process and the subsequent transfer of the cured bodies into the mould, after performing the "pressure heating/cooling" cycle, the semifoamed germs will end their expansion inside ovens under a dynamic atmosphere of saturated steam.

The cellular foamed article will be submitted to a thermal treatment inside air ovens, at a temperature comprised within the range of from a value of 80°C to a value of 125°C, for a time comprised within the range of from 24 hours to 120 hours, and as the result, a cellular foamed article will be obtained, which has a density of 55 kg/m³, a flexural heat distorsion temperature comprised within the range of from 130°C to 140°C, a compression strength at the temperature of 80°C of 4.1 kg/cm², a very high chemical resistance such that, e.g., the absorption of styrene after a 2-hour soaking of a sample of foamed article is of 2% by weight, relatively to the weight of the tested product, suitable for withstanding industrial processing cycles involving temperatures of 120°C, pressures of 1 kg/cm² for a time of 90 minutes.

### Example 2

By performing the production cycle set forth in Example 1, and using a mixture consisting of:
from 1 % to 10 % of 4,4'-diphenylmethane diisocyanate;
from 1 % to 27 % of 2,4-2,6-toluene diisocyanate ;
from 6 % to 9 % of maleic anhydride;
from 50 % to 55 % of poly(vinyl chloride);
from 0.1 % to 1 % of azodiisobutyronitrile;
from 0.1 % to 1 % of azodicarbonamide;
from 1 % to 2.8% of styrene;
from 5 % to 10 % of talc of "Micronic 00S" type; and
from 0.5 % to 2.5% of tribasic lead sulfate;

With the percentage of the individual components by weight being referred to the total weight of the compound, the semi foamed germs having reached the desired foaming rate, after a thermal treatment inside air ovens inside which temperature is comprised within the range of from a minimum value of 90°C to a maximum value of 140°C, for a time comprised within the range of from a minimum time of 48 hours to a maximum time of 360 hours, a cellular foamed article is obtained, which has a density of 300 kg/m³, and is endowed with characteristics of flexural heat distorsion temperature comprised within the range of from 150°C to 160°C, compression strength at room temperature of 100 kg/cm², a nearly perfect chemical resistance in that, its styrene absorption after a 2-hour soaking of a sample of foamed article is of 0.1-0.2% by weight, relatively to the weight of the tested product, suitable for being used in industrial production cycles involving temperatures of 130°C, pressures of from 2 to 4 kg/cm² for a time of up to 5 hours.

### Example 3

A paste composed by a mixture of:
from 2 % to 20 % of 4,4'-diphenylmethane diisocyanate;
from 10 % to 29 % of 2,4-2,6-toluene diisocyanate;
from 5 % to 12 % of maleic anhydride;
from 49 % to 60 % of poly(vinyl chloride);
from 4 % to 13 % of phthalic anhydride;
from 0.5 % to 7 % of azodiisobutyronitrile;
from 0.1 % to 2 % of azodicarbonamide ; and
from 0.5 % to 1.5% of dibasic lead phosphite,
with the percentages of individual components by weight being referred to the total weight of the compound, still according to the present manufacturing process, will yield a cellular foamed article having a density of 80 kg/m³, a flexural heat distorsion temperature of 100°C, a styrene absorption after a 2-hour soaking of the whole sample, of 1.7% by weight, relatively to the weight of the tested sample, good elasticity characteristics, constant use temperature of 80°C.

### Example 4

A paste composed by a mixture of:
from 5 % to 15 % of 4,4'-diphenylmethane diisocyanate;
from 15 % to 25 % of 2,4-2,6-toluene diisocyanate ;
from 3 % to 10 % of maleic anhydride;
from 45 % to 55 % of poly(vinyl chloride);
from 8 % to 14 % of phthalic anhydride;
from 2 % to 10 % of azodiisobutyronitrile;
from 0.02% to 2 % of azodicarbonamide; and
from 0.2 % to 2 % of polybasic lead phosphite-sulfate,
with the percentages of individual components by weight being referred to the total weight of the compound, still according to the present manufacturing process, will yield a cellular foamed article having a density of 30 kg/ m³, a flexural heat distorsion temperature of 100°C, a compression strength of 2.7 kg/cm² at room temperature, a styrene absorption, according to the modalities of the preceding examples, of 6%, the structure of the cells is fine and regular.

The purpose mentioned in the preamble of the disclosure is thus achieved.

## Claims

1. A process for producing a foamed polymer, comprises the following steps:
- inside a dissolver, mixing a mixture constituted by at Least one isocyanate and a first unsaturated anhydride, which is charged to the dissolver in the liquid state and at a temperature of around 70°C;
- progressively cooling said mixture, with continuous stirring, until a temperature not higher than 22°C is reached;
- adding to the mixture, with continuous stirring, a second aromatic anhydride, at least one foaming agent, poly(vinyl chloride), and a heat stabilizer;
- keeping said mixture with continuous stirring, at said temperature, until a mixture with a paste-like consistency (a "paste") is obtained, which is poured, after a preliminary filtration, into a mould, or container;
- curing the paste by charging the container to an oven under atmospheric pressure and at a temperature not higher than 80°C;
- causing the paste to undergo complete curing under pressure, by increasing the temperature up to 180°C, and subsequent cooling until partially foamed germs are obtained; and
- completing the germ foaming process by heating in water, or inside ovens in the presence of steam.

2. A process according to claim 1, characterized in that a vinylidene compound is also added to said mixture.

3. A process according to claim 1, characterized in that:
- said mixture is constituted by 2,4-2,6-toluene diisocyanate and/or 4,4'-diphenylmethane diisocyanate and maleic anhydride;
- said second aromatic anhydride is constituted by phthalic anhydride;
- said foaming agents are azodiisobutyronitrile and/or azodicarbonamide;
- said vinylidene compound is styrene.

4. A process according to claims 1 and 3, characterized in that:
- said first liquid, unsaturated anhydride is at a temperature of round 70°C;
- the mixture is kept with constant stirring, with the impeller of the dissolver having a peripheral speed comprised within the range of from 6 meter/second to 9 meter/second (20 feet/second to 30 feet/second);
- said mixture is progressively cooled until a temperature comprised within the range of from 14°C to 18°C is reached;
- after reaching and maintaining said temperature, to the mixture inside the dissolver said second aromatic anhydride, said at least one foaming agent, a vinylidene compound, poly(vinyl chloride) and a heat stabilizer are added;
- still with cooling, compounding is continued and the peripheral speed of the impeller is set at a value comprised within the range of from 16 meter/second to 23 meter/second (53 feet/second up to 76 feet/second)
- the resulting, perfectly homogeneous, paste is poured, after being filtered, into suitable containers, for the subsequent "curing" process, or directly into a mould, at a temperature which is kept comprised within the range of from 18°C up to 22°C;
- the paste contained inside the suitable containers is charged to ovens inside which, with air circulation, wherein air circulates at a speed of 0.5-2 m/second, the relative humidity inside the chamber is of 15-20%, the temperature is comprised within the range of from a value of 35°C up to a value of 80°C, for a time period ranging between 1 and 6 hours, the "grafting" reaction of maleic anhydride-styrene-poly(vinyl chloride) is initiated;
- under pressure, and progressively increasing the operating temperature, the reaction is completed, with decomposition of the foaming agents, with azodilsobutyronitrile also acting as the "polymerization initiator", and when the temperature of 170°C-180°C is reached, the gelation of poly(vinyl chloride) takes place.
- by cooling, partially foamed germs are obtained, which will complete their foaming process by being submitted to heating in water, or inside ovens, in the presence of steam.

5. A process according to claim 1, characterized in that:
- said mixture is constituted by 2,4-2,6-toluene diisocyanate and/or 4,4'-diphenylmethane diisocyanate and maleic anhydride;
- said second aromatic anhydride is constituted by phthalic anhydride;
- said foaming agents are azodiisobutyronitrile and/or azodicarbonamide.

6. A process according to claims 1 and 5, characterized in that:
- said first liquid, unsaturated anhydride is at a temperature of round 70°C;
- the mixture is kept with constant stirring, with the impeller of the dissolver having a peripheral speed comprised within the range of from 6 meter/second to 9 meter/second (20 feet/second to 30 feet/second)
- said mixture is progressively cooled until a temperature comprised within the range of from 14°C to 18°C is reached;
- after reaching and maintaining such a temperature value, to the mixture inside the dissolver said second aromatic anhydride, said at least one foaming agent, poly(vinyl cloride), and a heat stabilizer are added;
- still with cooling, the compounding is continued and the peripheral speed of the impeller is set at a value comprised within the range of from 15 meter/second to 23 meter/second (50 feet/second up to 76 feet/second)
- the resulting, perfectly homogeneous, paste is poured, after being filtered, into suitable containers, for the subsequent "curing" process, or directly into a mould, at a temperature which is kept comprised within the range of from 18°C up to 22°C;
- the paste contained inside the suitable containers is charged to ovens inside which, with air circulation, wherein air circulates at a speed of 0.5-2 m/second, the relative humidity inside the chamber is of 15-20%, the temperature is comprised within the range of from a minimum value of 35°C up to a maximum value of 80°C, for a time period ranging between 1 and 6 hours, said paste undergo curing;
- under pressure, and progressively increasing the operating temperature, the reaction is completed, with the decomposition taking place of the foaming agents, with azodiisobutyronitrile also acting as the "polymerization initiator", and when the temperature of 170°C-180°C is reached, the gelation of poly(vinyl chloride) taking place.
- by cooling, partially foamed germs are obtained, which will complete their foaming process by being submitted to heating in water, or inside ovens, in the presence of steam.

7. A process according to claim 1, in which said paste is constituted by a mixture of :
from 1 % to 20 % of 4,4'-diphenylmethane diisocyanate;
from 10 % to 30 % of 2,4-2,6-toluene diisocyanate ;
from 5 % to 10 % of maleic anhydrides;
from 40 % to 60 % of poly(vinyl chloride);
from 3 % to 10 % of phthalic anhydride;
from 0.5 % to 7 % of azodiisobutyronitrile;
from 0.1 % to 3 % of azodicarbonamide;
from 1 % to 5 % of styrene ; and
from 0.5 % to 2 % of dibasic lead phthalate.

8. A process according to claim 1, in which said paste is constituted by a mixture of :
from 1 % to 10 % of 4,4'-diphenylmethane diisocyanate;
from 1 % to 27 % of 2,4-2,6-toluene diisocyanate ;
from 6 % to 9 % of maleic anhydride;
from 50 % to 55 % of poly(vinyl chloride);
from 0.1 % to 1 % of azodiisobutyronitrile;
from 0.1 % to 1 % of azodicarbonamide;
from 1.5 % to 2.8% of styrene;
from 5 % to 10 % of talc of "Micronic 00S" type having a granulometry D95=28.5 µm, D75=17.0 µm, D50=10.2 µm, D25=5.4µm; and
from 0.5 % to 2.5% of tribasic lead sulfate.

9. A process according to claim 1, in which said paste is constituted by a mixture of:
from 2 % to 20 % of 4,4'-diphenylmethane diisocyanate;
from 10 % to 29 % of 2,4-2,6-toluene diisocyanate;
from 5 % to 12 % of maleic anhydride;
from 49 % to 60 % of poly(vinyl chloride);
from 4 % to 13 % of phthalic anhydride ;
from 0.5 % to 7 of azodlisobutyronitrile;
from 0.1 % to 2 % of azodicarbonamide; and
from 0.5 % to 1.5% of dibasic lead phosphite.

10. A process according to claim 1, in which said paste is constituted by a mixture of
from 3 % to 15 % of 4,4'-diphenylmethane diisocyanate;
from 15 % to 25 % of 2,4-2,6-toluene diisocyanate
from 3 % to 10 % of maleic anhydride;
from 45 % to 55 % of poly(vinyl chloride);
from 8 % to 14 % of phthalic anhydride ;
from 2 % to 10 % of azodiisobutyronitrile;
from 0.02% to 2 % of azodicarbonamide; and
from 0.2% to 2 % of polybasic lead phosphite-sulfate.

11. A process according to claim 1, characterized in that in order to increase its characteristics of high temperature resistance, the foamed, cellular article is submitted to a thermal treatment in air ovens, inside which the temperature is comprised within the range of from a value of 80°C, up to a value of 140°C, and for a time period ranging from a value of 24 hours, up to a value of 360 hours.

## Patentansprüche

1. Verfahren zur Herstellung eines geschäumten Polymers, welches die folgenden Schritte umfaßt:
- innerhalb eines Dispergieraggregates wird ein Gemisch, bestehend aus wenigstens einem Isocyanat und einem ersten ungesättigten Anhydrid gemischt, welches in das Dispergieraggregat in flüssigem Zustand und bei einer Temperatur von ungefähr 70°C eingegeben wird;
- dieses Gemisch wird fortlaufend gekühlt, unter kontinuierlichem Rühren, bis eine Temperatur nicht höher als 22°C erreicht wird;
- zu dem Gemisch wird unter kontinuierlichem Rühren ein zweites aromatisches Anhydrid, wenigstens ein Treib-Mittel, Poly(vinyl-chlorid), und ein Hitzestabilisator zugefügt;
- dieses Gemisch wird kontinuierlich bei dieser Temperatur gerührt, bis ein Gemisch mit einer pastenförmigen Konsistenz ('Paste') erhalten wird, welches nach einer Vorfiltration in eine Form oder einen Behälter gegossen wird;
- die Paste wird ausgehärtet, indem der Behälter in einen Ofen unter atmosphärischem Druck und einer Temperatur von nicht mehr als 80°C eingebracht wird;
- die Paste wird einer kompletten Aushärtung unter Druck unterzogen, indem die Temperatur auf 180°C angehoben wird, und darauffolgend gekühlt wird, bis teilweise geschäumte Keime erhalten werden; und
- das Verfahren zum Schäumen des Keimes wird durch Erhitzen in Wasser oder innerhalb von Öfen in Gegenwart von Dampf abgeschlossen.

2. Verfahren nach Anspruch 1,
dadurch gekennzeichnet,
daß weiterhin eine Vinyliden-Verbindung diesem Gemisch zugesetzt wird.

3. Verfahren nach Anspruch 1,
dadurch gekennzeichnet, daß:
- das Gemisch aus 2,4-2,6-Toluol-diisocyanat und/oder 4,4'-Diphenylmethan-diisocyanat und Maleinsäureanhydrid besteht;
- das zweite aromatische Anhydrid aus Phthalsäure-anhydrid besteht;
- die Treib-Mittel Azo-diisobutyronitril und/ oder Azo-dicarbonamid sind;
- die Vinyliden-Verbindung Styren ist;

4. Verfahren nach Anspruch 1 und 3,
dadurch gekennzeichnet, daß:
- diese erste Flüssigkeit ein ungesättigtes Anhydrid bei einer Temperatur von ungefähr 70°C ist;
- das Gemisch mit dem Rührwerkzeug des Rühraggregats konstant gerührt wird, welches eine Umdrehungsgeschwindigkeit im Bereich von 6 Meter/Sekunde bis 9 Meter/Sekunde (20 Fuß/Sekunde bis 30 Fuß/Sekunde) aufweist;
- dieses Gemisch fortschreitend bis zu einer Temperatur gekühlt wird, die einen Bereich von 14°C bis 18°C aufweist;
- nachdem diese Temperatur erreicht und gehalten wird, dem Gemisch in Inneren des Rühraggregats das zweite aromatische Anhydrid, das zumindest eine Treib-Mittel, eine Vinyliden-Verbindung, Poly(vinyl-chlorid) und ein Hitze-Stabilisator zugesetzt wird;
- unter weiterem Kühlen das Mischen fortgesetzt wird und die Umdrehungsgeschwindigkeit des Rührwerkzeuges auf einen Wert eingestellt wird, der in einem Bereich von 16 Meter/Sekunde bis 23 Meter/Sekunde (53 Fuß/Sekunde bis 76 Fuß/Sekunde) liegt;
- die sich ergebende, vorzugsweise homogene Paste, nach Filtration, in geeignete Behälter, für das darauffolgende 'Aushärtungs'-Verfahren oder direkt in eine Form, unter einer Temperatur gegossen wird, die in einem Bereich von 18°C bis 22°C gehalten wird;
- die Paste, die in den geeigneten Behältern enthalten ist, in Öfen gegeben wird, in welchen unter Luftzirkulation, wobei die Luft mit einer Umdrehungsgeschwindigkeit von 0,5-2 m/Sekunde zirkuliert, die relative Luftfeuchtigkeit im Kammerinnern zwischen 15 bis 20 % ist, die Temperatur in einem Bereich von einem Wert zwischen 1 und 6 Stunden liegt, in einem Bereich von einem Wert von 35°C bis zu einem Wert von 80° C liegt, wobei die 'Aufpolymerisations-Reaktion' von Maleinsäureanhydrid-Styren-Poly(vinyl-chlorid) eingeleitet wird;
- die Reaktion unter Druck und zunehmend ansteigender Arbeitstemperatur abgeschlossen wird, die Treib-Mittel abgebaut werden, indem Azo-diisobutyronitril auch als der 'Polymerisations-Starter' wirkt, und, wenn die Temperatur von 170°C bis 180°C erreicht ist, das Erstarren von Poly(vinylchlorid) erfolgt;
- durch Kühlen teilweise geschäumte Keime erhalten werden, die ihren Schäumungs-Vorgang vollenden, indem sie in Wasser oder in Öfen in Gegenwart von Dampf erhitzt werden.

5. Verfahren nach Anspruch 1,
dadurch gekennzeichnet, daß
- das Gemisch aus 2,4-2,6-Toluol-diisocyanat und/oder 4,4'-Diphenylmethan-diisocyanat und Maleinsäure-anhydrid besteht;
- das zweite aromatische Anhydrid aus Phthalsäure-anhydrid besteht;
- die Treib-Mittel Azo-diisobutyronitril und/oder Azo-dicarbonamid sind.

6. Verfahren nach den Ansprüchen 1 und 5,
dadurch gekennzeichnet, daß
- die erste Flüssigkeit ungesättigtes Anhydrid, bei einer Temperatur von ungefähr 70°C, ist;
- das Gemisch mit einem Rührwerkzeug des Rühraggregats mit einer Umdrehungsgeschwindigkeit konstant gerührt wird, die in einem Bereich von 6 Meter/Sekunde bis 9 Meter pro Sekunde (20 Fuß/Sekunde bis 30 Fuß/Sekunde) liegt;
- das Gemisch zunehmend gekühlt wird, bis eine Temperatur erreicht wird, die in dem Bereich von 14°C bis 18°C erreicht ist;
- nachdem ein derartiger Temperatur-Wert erreicht und gehalten wurde, dem Gemisch im Innern des Rühraggregates das zweite aromatische Anhydrid und das zumindest eine Treib-Mittel, Poly(vinyl-chlorid) und ein Hitzestabilisator zugesetzt wird;
- weiterhin unter Kühlung das Vermischen fortgesetzt und die Umdrehungsgeschwindigkeit des Rührwerkzeuges auf einen Wert eingestellt wird, der in dem Bereich von 15 Meter pro Sekunde bis 23 Meter/Sekunde (50 Fuß/Sekunde bis 76 Fuß/ Sekunde) liegt;
- die sich ergebende, vollständig homogene Paste, nach Filtration, in geeignete Behälter für das darauffolgende 'Aushärtungs'-Verfahren oder direkt in eine Form bei einer Temperatur gegossen wird, welche in dem Bereich von 18°C bis 22°C liegt;
- die Paste,die innerhalb der geeigneten Behälter enthalten ist, in Öfen gegeben wird, in welchen unter Luftzirkulation, worin Luft mit einer Umdrehungsgeschwindigkeit von 0,5-2 m/Sekunde zirkuliert, die relative Luftfeuchtigkeit im Kammerinnern bei 15 bis 20 % ist, die Temperatur in einem minimalen Wert von 35°C bis zu einem maximalen Wert von 80°C liegt, die Paste über eine Zeitperiode, die in einem Bereich von 1 bis 6 Stunden liegt, aushärtet;
- unter Druck und zunehmend ansteigender Arbeitstemperatur die Reaktion abgeschlossen wird, wobei der Abbau der Treib-Mittel stattfindet, indem Azo-diisobutyronitril auch als 'Polymerisations-Starter' wirkt, und daß, wenn die Temperatur von 170°C bis 180°C erreicht wird, das Erstarren von Poly(vinyl-chlorid) stattfindet;
- durch Kühlen teilweise geschäumte Keime erhalten werden, die ihren Schäumungs-Prozess abschließen, indem sie in Wasser oder in Öfen in Gegenwart von Dampf erhitzt werden.

7. Verfahren nach Anspruch 1, in welchem diese Paste aus einem Gemisch von:
von 1 % bis 20 % 4,4'-Diphenyl-methan-diisocyanat;
von 10 % bis 30 % 2,4-2,6-Toluol-diisocyanat;
von 5 % bis 10 % Maleinsäure-anhydrid;
von 40 % bis 60 % Poly(vinyl-chlorid);
von 3 % bis 10 % Phthalsäure-anhydrid;
von 0,5 % bis 7 % Azo-diisobutyronitril;
von 0,1 % bis 3 % Azo-dicarbonamid;
von 1 % bis 5 % Styren; und
von 0,5 % bis 2 % Dibasisches-Blei-Phthalat
besteht.

8. Verfahren nach Anspruch 1, in welchem diese Paste aus einem Gemisch von
von 1 % bis 10 % 4,4'-Diphenyl-methan-diisocyanat;
von 1 bis 27 % 2,4-2,6-Toluol-diisocyanat;
von 6 % bis 9 % Maleinsäure-anhydrid;
von 50 bis 55 % Poly(vinyl-chlorid);
von 0,1 % bis 1 % Azo-diisobutyronitril;
von 0,1 % bis 1 % Azo-dicarbonamid;
von 1,5 % bis 2,8 % Styren;
von 5 % bis 10 % Talk vom Typ 'Micronie OOS' mit der Analyse der Teilchengröße von D 95 = 28,5 µm, D 75 = 17,0 µm, D 50 = 10,2 µm, D 25 = 5,4 µm
von 0,5 % bis 2,5 % Tribasisches-Blei-Sulfat
besteht.

9. Verfahren nach Anspruch 1, in welchem die Paste aus dem folgenden Gemisch
von 2 % bis 20 % 4,4'-Diphenyl-methan-diisocyanat;
von 10 % bis 29 % 2,4-2,6-Toluol-diisocyanat;
von 5 % bis 12 % Maleinsäure-anhydrid;
von 49 % bis 60 % Poly(vinyl-chlorid);
von 4 % bis 13 % Phthalsäure-anhydrid;
von 0,5 % bis 7 % Azo-diisobutyronitril;
von 0,1 % bis 2 % Azo-dicarbonamid; und
von 0,5 % bis 1.5 % Dibasisches-Blei-Phosphit
besteht.

10. Verfahren nach Anspruch 1, in welchem die Paste aus dem folgenden Gemisch
von 3 % bis 15 % 4,4'-Diphenyl-methan-diisocyanat;
von 15 % bis 25 % 2,4-2,6-Toluol-diisocyanat;
von 3 % bis 10 % Maleinsäure-anhydrid;
von 45 % bis 55 % Poly(vinyl-chlorid);
von 8 % bis 14 % Phthalsäure-anhydrid;
von 2 % bis 10 % Azo-diisobutyronitril;
von 0,02 % bis 2 % Azo-dicarbonamid; und
von 0,2 % bis 2 % Polybasisches-Blei-Phosphit-Sulfat
besteht.

11. Verfahren nach Anspruch 1,
dadurch gekennzeichnet,
daß das geschäumte zellförmige Erzeugnis zur Vergrößerung seiner Temperaturbeständigkeit einer Hitzebehandlung in Luftöfen, in denen die Temperatur in einem Bereich von einem Wert von 80°C bis zu einem Wert von 140°C liegt, und über eine Zeitperiode von 24 Stunden bis 360 Stunden unterzogen wird.

## Revendications

1. Procédé pour produire un polymère expansé, qui comprend les étapes suivantes consistant:
- à l'intérieur d'un appareil à dissoudre, à mélanger un mélange composé d'au moins un isocyanate et d'un premier anhydride insaturé, qui est chargé dans l'appareil à dissoudre à l'état liquide et à une température d'environ 70°C;
- à refroidir progressivement ledit mélange, sous agitation continue, jusqu'à atteindre une température ne dépassant pas 22°C;
- à ajouter au mélange, sous agitation continue, un deuxième anhydride aromatique, au moins un agent d'expansion, du poly(chlorure de vinyle), et un stabilisant à la chaleur;
- à maintenir ledit mélange sous agitation continue, à ladite température, jusqu'à obtenir un mélange ayant une consistance pâteuse (une "pâte"), qui est versé, après une filtration préliminaire, dans un moule ou un récipient;
- à durcir la pâte en chargeant le récipient dans un four sous la pression atmosphérique et à une température ne dépassant pas 80°C;
- à faire subir à la pâte un durcissement complet sous pression, en augmentant la température jusqu'à 180°C, et à refroidir ultérieurement jusqu'à obtenir des germes partiellement expansés; et
- à achever le procédé d'expansion de germes en chauffant dans l'eau, ou à l'intérieur de fours en présence de vapeur d'eau.

2. Procédé selon la revendication 1, caractérisé en ce qu'un composé vinylidène est également ajouté audit mélange.

3. Procédé selon la revendication 1, caractérisé en ce que:
- ledit mélange est composé du diisocyanate de 2,4-2,6-toluène et/ou du diisocyanate de 4,4'-diphénylméthane et de l'anhydride maléique;
- ledit deuxième anhydride aromatique est composé de l'anhydride phtalique;
- lesdits agents d'expansion sont l'azodiisobutyronitrile et/ou l'azodicarbonamide;
- ledit composé vinylidène est le styrène.

4. Procédé selon les revendications 1 et 3, caractérisé en ce que:
- ledit premier anhydride insaturé liquide est à une température d'environ 70°C;
- le mélange est maintenu sous agitation constante, la turbine de l'appareil a dissoudre ayant une vitesse périphérique comprise entre 6 mètres/seconde et 9 mètres/seconde (entre 20 feet/seconde et 30 feet/seconde);
- ledit mélange est progressivement refroidi jusqu'à atteindre une température comprise entre 14°C et 18°C;
- après avoir atteint et en maintenant ladite température, au mélange à l'intérieur de l'appareil à dissoudre, ledit deuxième anhydride aromatique, ledit au moins un agent d'expansion, un composé vinylidène, le poly(chlorure de vinyle) et un stabilisant à la chaleur sont ajoutés;
- toujours sous refroidissement, la formulation est poursuivie et la vitesse périphérique de la turbine est réglée à une valeur comprise entre 16 mètres/seconde et 23 mètres/seconde (53 feet/seconde et 76 feet/seconde);
- la pâte résultante, parfaitement homogène, est versée, après avoir été filtrée, dans des récipients appropriés, pour le procédé de "durcissement" ultérieur, ou directement dans un moule, à une température qui est maintenue entre 18°C et 22°C;
- la pâte contenue à l'intérieur des récipients appropriés est chargée dans des fours à l'intérieur desquels, avec une circulation d'air, où l'air circule à une vitesse de 0,5 à 2 m/s, l'humidité relative à l'intérieur de la chambre est de 15 à 20%; la température est comprise entre 35°C et 80°C, pendant une durée comprise entre 1 et 6 heures, la réaction de "greffage" de l'anhydride maléique-styrène-poly(chlorure de vinyle) est amorcée;
- sous pression, et en augmentant progressivement la température de fonctionnement, la réaction est achevée, avec la décomposition des agents d'expansion, l'azodiisobutyronitrile agissant également en tant qu"'amorceur de polymérisation", et quand la température de 170°C - 180°C est atteinte, la gélification du poly(chlorure de vinyle) a lieu;
- par refroidissement, des germes partiellement expansés sont partiellement obtenus, qui achèveront leur processus d'expansion en étant chauffer dans l'eau, ou à l'intérieur de fours, en présence de vapeur d'eau.

5. Procédé selon la revendication 1, caractérisé en ce que:
- ledit mélange est constitué du diisocyanate de 2,4-2,6-toluène et/ou du diisocyanate de 4,4'-diphénylméthane et de l'anhydride maléique;
- ledit deuxième anhydride aromatique est constitué de l'anhydride phtalique;
- lesdits agents d'expansion sont l'azodiisobutyronitrile et/ou l'azodicarbonamide.

6. Procédé selon les revendications 1 et 5, caractérisé en ce que:
- ledit premier anhydride insaturé liquide est à une température aux environs de 70°C;
- le mélange est maintenu sous agitation constante, la turbine de l'appareil à dissoudre ayant une vitesse périphérique comprise entre 6 mètres/seconde et 9 mètres/seconde (20 feet/seconde et 30 feet/seconde);
- ledit mélange est progressivement refroidi jusqu'à atteindre une température comprise entre 14°C et 18°C;
- après avoir atteint et en maintenant une telle valeur de température, au mélange à l'intérieur de l'appareil à dissoudre, ledit deuxième anhydride aromatique, ledit au moins un agent d'expansion, le poly(chlorure de vinyle), et un stabilisant de chaleur sont ajoutés;
- toujours sous refroidissement, la formulation est poursuivie et la vitesse périphérique de la turbine est réglée à une valeur comprise entre 15 mètres/seconde et 23 mètres/secondes (50 feet/seconde et 76 feet/seconde);
- la pâte résultante, parfaitement homogène, est versée, après avoir été filtrée, dans des récipients appropriés, pour le procédé de "durcissement" ultérieur, ou directement dans un moule, à une température qui est maintenu entre 18°C et 22°C;
- la pâte contenue à l'intérieur des récipients appropriés est chargée dans des fours à l'intérieur desquels, avec une circulation d'air, où l'air circule à une vitesse de 0,5 à 2 m/s, l'humidité relative à l'intérieur de la chambre est de 15 à 20%, la température est comprise entre une valeur minimale de 35°C et une valeur maximale de 80°C, pendant une durée comprise entre 1 et 6 heures, ladite pâte subit un durcissement;
- sous pression, et en augmentant progressivement la température de fonctionnement, la réaction est achevée, la décomposition prenant la place des agents d'expansion, l'azodiisobutyronitrile agissant également en tant qu"'amorceur de polymérisation", et quand la température de 170°C - 180°C est atteinte, la gélification du poly(chlorure de vinyle) a lieu;
- par refroidissement, des germes partiellement expansés sont obtenus, qui achèveront leur processus d'expansion en étant chauffer dans l'eau, ou à l'intérieur des fours, en présence de vapeur d'eau.

7. Procédé selon la revendication 1, dans lequel ladite pâte est composée d'un mélange:
- de 1% à 20% de diisocyanate de 4,4'-diphénylméthane;
- de 10% à 30% de diisocyanate de 2,4-2,6-toluène;
- de 5% à 10% d'anhydride maléique;
- de 40% à 60% de poly(chlorure de vinyle);
- de 3% à 10% d'anhydride phtalique;
- de 0,5% à 7% d'azodiisobutyronitrile;
- de 0,1% à 3% d'azodicarbonamide;
- de 1% à 5% de styrène; et
- de 0,5% à 2% de phtalate de plomb dibasique.

8. Procédé selon la revendication 1, dans lequel ladite pâte est composée d'un mélange:
- de 1% à 10% de diisocyanate de 4,4'-diphénylméthane;
- de 1% à 27% de diisocyanate de 2,4-2,6-toluène;
- de 6% à 9% d'anhydride maléique;
- de 50% à 55% de poly(chlorure de vinyle);
- de 0,1% à 1% d'azodiisobutyronitrile;
- de 0,1% à 1% d'azodicarbonamide;
- de 1,5% à 2,8% de styrène;
- de 5% à 10% de talc ayant une granulométrie D95 = 28,5 µm; D75 = 17,0 µm; D50 = 10,2 µm; D25 = 5,4 µm; et
- de 0,5% à 2,5% de sulfate de plomb tribasique.

9. Procédé selon la revendication 1, dans lequel ladite pâte est composée d'un mélange:
- de 2% à 20% de diisocyanate de 4,4'-diphénylméthane;
- de 10% à 29% de diisocyanate de 2,4-2,6-toluène;
- de 5% à 12% d'anhydride maléique;
- de 49% à 60% de poly(chlorure de vinyle);
- de 4% à 13% d'anhydride phtalique;
- de 0,5% à 7% d'azodiisobutyronitrile;
- de 0,1% à 2% d'azodicarbonamide; et
- de 0,5% à 1,5% de phosphite de plomb dibasique.

10. Procédé selon la revendication 1, dans lequel ladite pâte est composée d'un mélange:
- de 3% à 15% de diisocyanate de 4,4'-diphénylméthane;
- de 15% à 25% de diisocyanate de 2,4-2,6-toluène;
- de 3% à 10% d'anhydride maléique;
- de 45% à 55% de poly(chlorure de vinyle);
- de 8% à 14% d'anhydride phtalique;
- de 2% à 10% d'azodiisobutyronitrile;
- de 0,02% à 2% d'azodicarbonamide; et
- de 0,2% à 2% de phosphite-sulfate de plomb polybasique.

11. Procédé selon la revendication 1, caractérisé en ce que, afin d'augmenter ses caractéristiques de résistance aux températures élevées, l'article cellulaire expansé est soumis à un traitement thermique dans des fours à air, à l'intérieur desquels la température est comprise entre 80°C et 140°C, et pendant une durée comprise entre 24 heures et 360 heures.
